# EUROPEAN PATENT SPECIFICATION

(11) **EP 1 837 560 B1**
(45) Date of publication and mention of the grant of the patent: **06.01.2010**
(21) Application number: 07005660.1
(22) Date of filing: 20.03.2007
(51) Int. Cl.: F16H 59/08, F16H 59/40, F16H 59/42, F16H 59/44, F16H 61/12

(54) **Automated manual transmission and method for controlling the same**
Automatisiertes Handschaltgetriebe und Verfahren zu seiner Steuerung
Transmission manuelle automatisée et son procédé de commande

(30) Priority: 20.03.2006 JP 2006077663
(43) Date of publication of application: 26.09.2007
(73) Proprietor: AISIN AI Co., Ltd., Nishio-shi, Aichi-ken (JP)
(72) Inventor: Satoh, Hidenobu, Nishio-shi Aichi-ken (JP); Aoyama, Yoshiyuki, Nishio-shi Aichi-ken (JP)
(74) Representative: Marshall, John Grahame

(56) References cited:
- EP-A- 1 195 544
- EP-A- 1 249 644
- DE-A1- 10 253 035
- US-A1- 2005 109 141

## Description

### FIELD OF THE INVENTION

This invention generally relates to an automated manual transmission and a method for controlling the same during a gear change operation according to the preamble of claims 1, 5. More particularly, this invention pertains to a synchronization determination method in a synchromesh type automated manual transmission in the case where a rotational speed of an output shaft cannot be detected.

### BACKGROUND

A manual transmission in which a driver performs a gear change operation and an automatic transmission in which the gear change operation is automatically performed are known for a transmission of a vehicle. The manual transmission in general includes an input shaft for transmitting input rotations from an engine, and the like, an output shaft for transmitting output rotations to wheels, multiple drive gears fixed to the input shaft, multiple idler gears relatively rotatably provided at the output shaft so as to constantly engage with the multiple drive gears, respectively, a synchronizer ring integrally rotating with the output shaft so as to frictionally engage with the idler gear, and a sleeve to be fitted to the idler gear. The aforementioned components in combination with an electronic control unit, an actuator, and a sensor for detecting a rotational speed of each portion constitute a synchromesh automated manual transmission that is an automatic transmission type.

An example of a control unit of the synchromesh type automated manual transmission is disclosed in the closest prior art document DE 10253035, family member of JP2004-19914A. The control unit disclosed includes an input shaft rotational speed sensor, an output shaft rotational speed sensor, multiple gears, a shift and select actuator, a shift and select position sensor, and a controlling means. The control unit determines a synchronization error in which the synchronization between the input shaft and the output shaft cannot be attained during the gear change operation. According to the general gear change operation, after the next gear set is selected, the synchronizer ring is driven first so that the input shaft and the output shaft frictionally engage with each other to gradually achieve the synchronization therebetween. Then, the sleeve is driven so that the input shaft and the output shaft are firmly connected to each other by spline fitting, and the like, to thereby complete the gear change operation. In this case, an output load of the actuator is large when the synchronizer ring is driven. On the other hand, the output load when the sleeve is driven is small so as to reduce an impact occurring at the time of fitting the sleeve to the idler gear.

Generally, an electromagnetic sensor capable of non-contact sensing is used for the rotational speed sensor. According to such sensor, detection accuracy may be deteriorated when the rotational speed decreases. The transmission of a vehicle is frequently used in a low vehicle speed condition such as when the vehicle stops from the running state and at that time it may be impossible to detect the rotational speed of the output shaft that is decelerating. In this case, the synchronization cannot be determined on the basis of a comparison between the rotational speeds of the input shaft and the output shaft. Thus, as a conventional alternative method, an axial movement amount of the synchronizer ring or the sleeve is detected so as to determine the synchronization based on a progress status of the operation of the synchronizer ring or the sleeve. However, according to the synchronization determination based on the operation progress status, an elapsed time from the completion of synchronization to the determination thereof is long, which may lead to a long gear change time. In addition, due to the delay of synchronization determination, the large output load of the actuator that has been used to drive the synchronizer ring may be directly applied to the sleeve, which may cause a large impact at the time of fitting the sleeve to the idler gear.

Thus, a need exists for an automated manual transmission and a method for controlling the same by which synchronization between an input shaft and an output shaft can be precisely determined without delay even when a rotational speed of the output shaft cannot be detected. In addition, a need also exists for an automated manual transmission and a method for controlling the same by which a reduced gear change time and a small mechanical shock upon fitting of a sleeve can be achieved.

### SUMMARY OF THE INVENTION

According to the present invention, there is provided a method for controlling an automated manual transmission that includes a gear change mechanism for transmitting power at a predetermined gear ratio, having the features of claim 1. There is also provided an automated transmission that includes a gear change mechanism for transmitting power at a predetermined gear ratio, having the features of claim 5.

A structure of the automated manual transmission that is a control object according to the present invention will be explained below. The gear change mechanism that is a main portion of the transmission includes, for example, three to six forward shift stages and one reverse shift stage. The two shafts, i.e., the input shaft and the output shaft, are arranged in the gear change mechanism. In this case, the third shaft, i.e., a counter shaft, can be added in the gear change mechanism so that the gear sets are appropriately arranged thereat. Further, a gear ratio obtained by a direct connection of the input shaft and the output shaft is also available. The operation mechanism changes or selects the gear set that transmits power based on a control command from the control unit. The operation mechanism is at least configured to select the next gear set provided at the input shaft and the output shaft, to bring the selected gear set to a frictionally engagement state so as to achieve the synchronization between the input shaft and the output shaft, and finally to firmly connect the selected gear set by meshed engagement. Thus, a style of an operation source, a transmission mechanism of an operation force, and the like are not limited.

The input shaft rotational speed detecting means and the output shaft rotational speed detecting means are configured to detect the rotational speed of the input shaft and the output shaft. These rotational speed detecting means are capable of non-contact sensing and can easily receive or transmit a detection signal relative to the control unit. That is, in view of economic efficiency, the magnetic type rotational speed sensor that has been used in the past is appropriately used for the rotational speed detecting means. Instead of using a rotational speed sensor, the output shaft rotational speed can be obtained by dividing a detection signal value from a wheel speed sensor that is normally provided by a reduction gear ratio of a differential apparatus. The progress status detecting means is configured to detect the operation progress status of the operation mechanism and for which a sensor can be used so as to appropriately detect a displacement amount of the operation mechanism depending on an operation force transmission structure of the operation mechanism. For example, a stroke detection sensor can be used for a linearly operating portion of the operation mechanism, and a rotation angle sensor can be used for a rotary operating portion.

The control unit is configured to acquire the rotational speed of the input shaft and the output shaft, and a signal indicating the operation progress status of the operation mechanism. For example, an electronic control unit incorporating a microcomputer and operated by software is used for the control unit. Further, the control unit realizes the acceleration calculating means by means of software. That is, the acceleration is obtained by storing the signal of the input shaft rotational speed acquired at a predetermined time interval in a memory as internal information and by performing a differential calculation per time unit.

Next, a method for controlling the automated manual transmission having the aforementioned structure during the gear change operation will be explained below. When the gear change operation is started, the gear set that has transmitted power so far is disengaged so as to achieve a neutral state where the power is not transmitted from the input shaft to the output shaft. Then, the next gear set is selected, however, the synchronization between the input shaft and the output shaft is not completed at this time and thus the immediate power transmission is impossible. The respective rotational speeds of the input shaft and the output shaft are controlled so as to achieve the synchronization at a new gear ratio. At this time, since the output shaft is connected to the wheels and driven by means of the vehicle's running inertia, the rotational speed of the input shaft is mainly controlled. That is, while the engine speed is being controlled, the selected gear set provided at the input shaft and the output shaft is brought to a frictionally engagement state to approach and achieve the synchronization. At this time, if the respective rotational speeds of the input shaft and the output shaft can be detected, these two speeds can be compared so as to assist an easy determination of the synchronization.

However, in the cases where the vehicle speed that is low falls below a detection lower limit of the rotational speed sensor provided at the output shaft or the wheel, it may be difficult to precisely detect the rotational speed of the output shaft. In such a case, according to the present invention, the synchronization is determined on the basis of an increase or decrease of the acceleration of the input shaft. Specifically, a signal of the input shaft rotational speed that is faster than the output shaft rotational speed and is thus detectable is captured by the control unit. The captured signal is then differentiated to thereby obtain the acceleration. Then, the acceleration obtained per time unit is compared to the predetermined determination start value. When the acceleration is equal to or greater than the predetermined determination start value, it is determined that the frictional engagement is proceeding. This is because, during the frictional engagement, the rotational speed of the input shaft gradually changes so as to come close to the rotational speed of the output shaft to thereby generate the large acceleration. The predetermined determination start value can be appropriately specified depending on a structure of each transmission. Further, in order to eliminate an impact such as a transient electrical noise from the rotational speed sensor, the condition in which it is detected multiple times sequentially that the acceleration is equal to or greater than the determination start value can be added to the determination condition. The acceleration may be constituted by both positive and negative values. The positive acceleration obtained in the gear change to a lower gear ratio and the negative acceleration obtained in the gear change to a higher gear ratio are used for the comparison with the predetermined determination start value.

After it is determined that the acceleration is equal to or greater than the determination start value, the acceleration per time unit is compared to the synchronization determination value. When the acceleration is equal to or smaller than the synchronization determination value, the synchronization is determined. This is because the small acceleration indicates that the input shaft and the output shaft substantially synchronize with each other and a difference between the rotational speeds thereof is minimized. The synchronization determination value can be appropriately specified by including a tolerance that will not affect the next meshed engagement and by considering the accuracy of the input shaft rotational speed sensor and the acceleration calculation error.

After the determination of synchronization, the control unit immediately proceeds the meshed engagement to thereby complete the gear change operation in a short time.

It is preferable that a synchronizer ring constituting the friction portion of the operation mechanism and frictionally engaging with an idler gear, which constitutes the gear provided at the output shaft in a relatively rotatable manner, by integrally rotating with the output shaft and being pressed in an axial direction thereof and a sleeve constituting the mesh portion of the operation mechanism and being fitted to the idler gear by integrally rotating with the output shaft and moving in the axial direction thereof are driven by a same actuator controlled by the control unit so as to output a large load before the synchronization is completed and to output a small load after the synchronization is completed.

According to the synchromesh mechanism, the multiple idler gears are provided at the output shaft so as to be relatively rotatable thereto. The idler gears constantly engage with the respective drive gears provided at the input shaft. After the synchronizer ring frictionally engages with one of the idler gears, the sleeve is fitted thereto. Finally, the input shaft and the output shaft are connected to each other so as to transmit power. The idler gears are used as a pair, for example, and in a middle of which respective synchronizer rings and a common sleeve are provided. The synchronizer ring and the sleeve are driven by the actuator, such as a motor, via the operation shaft through a known drive system such as a key synchronization. The actuator is not limited to the motor and another drive source such as a hydraulic mechanism can also be used.

In all drive systems, the control unit causes the actuator to output the large load so that the strong friction is generated during the frictional engagement by the synchronizer ring and then the synchronization is completed in a short time. Further, when the synchronization is determined, the sleeve is driven. At this time, the output load of the actuator is controlled to be small. This is because, since the sleeve causes the output shaft and the idler gear to finally engage through the spline fitting with each other, the gentle fitting of the sleeve with the small load can effectively prevent the mechanical shock.

In the cases where the rotational speed of the output shaft cannot be detected, the control unit calculates the acceleration of the input shaft. Until the calculated acceleration becomes equal to or greater than the determination start value and then becomes equal to or smaller than the synchronization determination value, the control unit controls the actuator to output the large load. After the calculated acceleration becomes equal to or smaller than the synchronization determination value, the control unit controls the actuator to output the small load.

It is preferable that the synchronization is determined in parallel with a synchronization determination based on the acceleration of the input shaft when an axial movement amount of the sleeve is equal to or greater than a predetermined amount.

According to the synchronization determination based on the axial movement amount of the sleeve, the synchronization is determined at a point where the sleeve is slightly fitted to the idler gear. Thus, the axial movement amount corresponding to this point is defined as a predetermined amount. This determination method corresponds to a conventional method adopted when the rotational speed of the output shaft cannot be detected and by which it is detected that the input shaft and the output shaft physically and integrally rotate with each other upon start of the sleeve fitting.

Because the conventional method is used in parallel or in combination with the method based on the acceleration of the input shaft, even if the synchronization determination based on the acceleration of the input shaft fails, the performance as well as the conventional transmission can be secured. For example, the acceleration barely occurs at the input shaft under a special running state, the input shaft rotational speed sensor fails, the signal transmission malfunctions, however this rarely happens.

It is preferable that the step includes obtaining a rotational speed of the output shaft.

According to the aforementioned invention, the control unit includes the acceleration calculating means for calculating the acceleration based on the rotational speed of the input shaft. When the calculated acceleration becomes equal to or greater than the predetermined determination start value and then becomes equal to or smaller than the synchronization determination value, the synchronization is determined. Thus, even if the rotational speed of the output shaft cannot be detected, the synchronization determination of the rotational speeds of the input shaft and the output shaft can be precisely performed without delay. The gear change operation time can be reduced and the mechanical shock caused by the sleeve fitting can be decreased.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic diagram of an automated manual transmission according to an embodiment of the present invention;

Fig. 2 is a timing chart illustrating a time variation of a detection signal and a control signal stored in a control unit of the automated manual transmission at a time of a deceleration operation; and

Fig. 3 is a flowchart illustrating a process of a synchronization determination performed by the control unit in the case where an output shaft rotational speed cannot be detected during a gear change operation.

### DETAILED DESCRIPTION

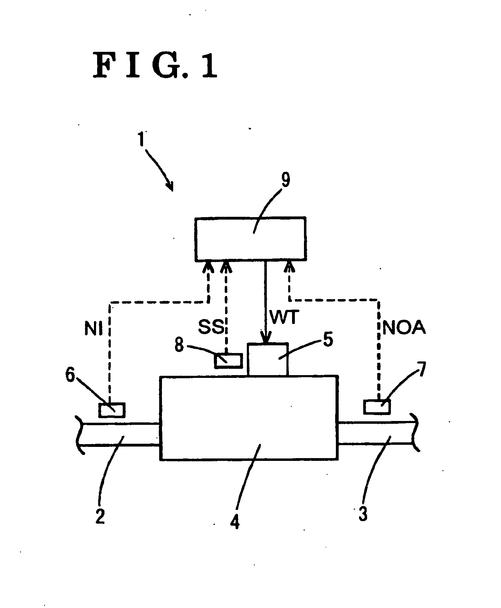

An embodiment of the present invention will be explained with reference to the attached drawings. Fig. 1 is a schematic diagram of an example of an automated manual transmission 1 that is a control object according to the present embodiment. The automated manual transmission 1 includes an input shaft 2, an output shaft 3 both of which transmit power, and a gear change mechanism 4. The input shaft 2 is connected directly or by means of a clutch (not shown) to a drive source such as an engine (not shown) so that power is input to the input shaft 2. The output shaft 3 is directly connected to wheels by means of a differential mechanism (not shown), and the like so that power is output from the output shaft 3. In the gear change mechanism 4, multiple gear sets are formed by drive gears fixed to the input shaft 2 and idler gears relatively rotatably provided at the output shaft 3, each drive gear and each idler gear engaging with each other, so as to provide a predetermined gear ratio.

An operation mechanism 5 is provided adjacent to the gear change mechanism 4. The operation mechanism 5 includes a shift and select portion, a synchronizer ring (friction portion), a sleeve (mesh portion), an actuator, and an operation shaft. The shift and select portion selects the gear set in the gear change mechanism 4. The synchronizer ring brings the idler gear of the selected gear set to frictionally engage with the output shaft 3. The sleeve brings the idler gear to be fitted to the output shaft 3. The actuator drives the shift and select portion, the synchronizer ring, and the sleeve. The operation shaft transmits an output load of the actuator. In addition, an input shaft rotational speed sensor 6 (input shaft rotational speed detecting means) is provided in the vicinity of the input shaft 2 so as to output a signal of an input shaft rotational speed NI while an output shaft rotational speed sensor 7 (output shaft rotational speed detecting means) is provided in the vicinity of the output shaft 3 so as to output a signal of an output shaft rotational speed NOA. Further, a shift stroke sensor 8 (progress status detecting means) is provided in the vicinity of the operation shaft of the operation mechanism 5 so as to output a signal of an axial movement amount SS of the operation shaft and the sleeve that operates therewith. The aforementioned three signals are each indicated by a dashed arrow in Fig. 1.

A control unit 9 is an electronic control unit incorporating a microcomputer and is electrically connected to receive the aforementioned three signals. The control unit 9 outputs a control signal (indicated by a solid line in Fig. 1) for controlling an output load WT of the actuator of the operation mechanism 5. The control unit 9 is operated by means of software programmed so that the control unit 9 performs a control method as explained below.

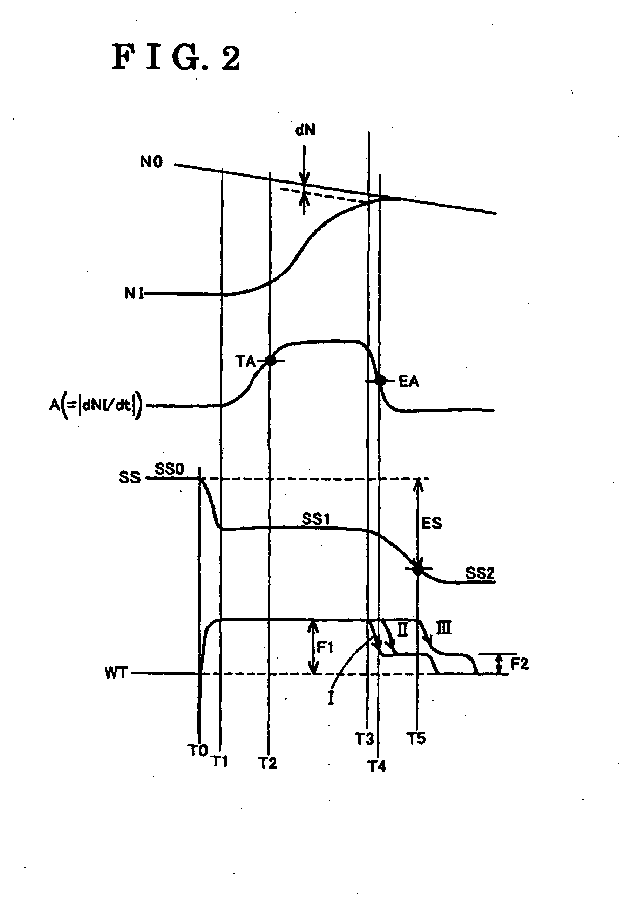

A method for controlling the automated manual transmission having the aforementioned structure will be explained with reference to Fig. 2. Fig. 2 is a timing chart illustrating a time variation of a detection signal and a control signal stored within the control unit 9 at a time of a deceleration operation. A lateral axis in Fig. 2 indicates a common time scale T. NO in Fig. 2 indicates an output shaft rotational speed for determination that is obtained by dividing an acquired output shaft rotational speed NOA by a reduction gear ratio of the selected gear set so as to be compared with the acquired input shaft rotational speed NI. A (=| dNI/dt|) is an absolute value of an acceleration of the input shaft 2 obtained on the basis of the input shaft rotational speed NI. SS is the acquired axial movement amount of the operation shaft and the sleeve. WT is an output load of the actuator to be controlled.

When the next gear set is selected upon start of the gear change operation, the actuator starts driving the operation shaft with a large output load F1 at a time T0. The operation shaft presses the synchronizer ring, which then moves from a position SS0 to SS1. The synchronizer ring starts to frictionally engage with the idler gear of the selected gear set from a time T1. The operation shaft hardly moves from the position SS1 during the frictional engagement. The input shaft rotational speed NI approaches the output shaft rotational speed for determination NO to thereby generate an acceleration A. At this time, if the output shaft rotational speed for determination NO has been obtained, the control unit 9 compares the output shaft rotational speed for determination NO with the input shaft rotational speed NI, and then, at a time T3 when a difference therebetween equals or falls below a predetermined value dN, the synchronization between the input shaft 2 and the output shaft 3 is determined. After the time T3, as illustrated by I in Fig. 2, the output load WT is immediately decreased from the large output load F1 to a small output load F2 so that the operation shaft is driven from a position SS 1 to SS2 to thereby gently fit the sleeve to the idler gear.

In the cases where the output shaft rotational speed for determination NO has not been obtained, the control unit 9 compares the acceleration A obtained by calculation with a predetermined determination start value TA. At a time T2 when the acceleration A is equal to or greater than the determination start value TA, it is determined that the frictional engagement of the synchronizer ring with the idler gear is being performed. Afterwards, the acceleration A is compared with a synchronization determination value EA. The synchronization is determined at a time T4 when the acceleration A is equal to or smaller than the synchronization determination value EA. Then, as illustrated by II in Fig. 2, the output load WT of the actuator is decreased. According to the control method using the acceleration A of the input shaft 2, the synchronization can be determined at a substantially same timing as that according to the control method by the comparison between the input shaft rotational speed NI and the output shaft rotational speed for determination NO.

Further, the control unit 9 performs the synchronization determination based on the axial movement amount SS of the operation shaft in parallel with the synchronization determination based on the acceleration A. That is, according to the synchronization determination based on the axial movement amount SS, the synchronization is determined at a time T5 when the axial movement amount SS is equal to or greater than a predetermined amount ES. Then, the output load WT of the actuator decreases as illustrated by III in Fig. 2. The synchronization determination based on the axial movement amount SS is a so-called backup function that is activated only when the method based on the comparison between the input shaft rotational speed NI and the output shaft rotational speed for determination NO, and the method based on the acceleration A both fail to function.

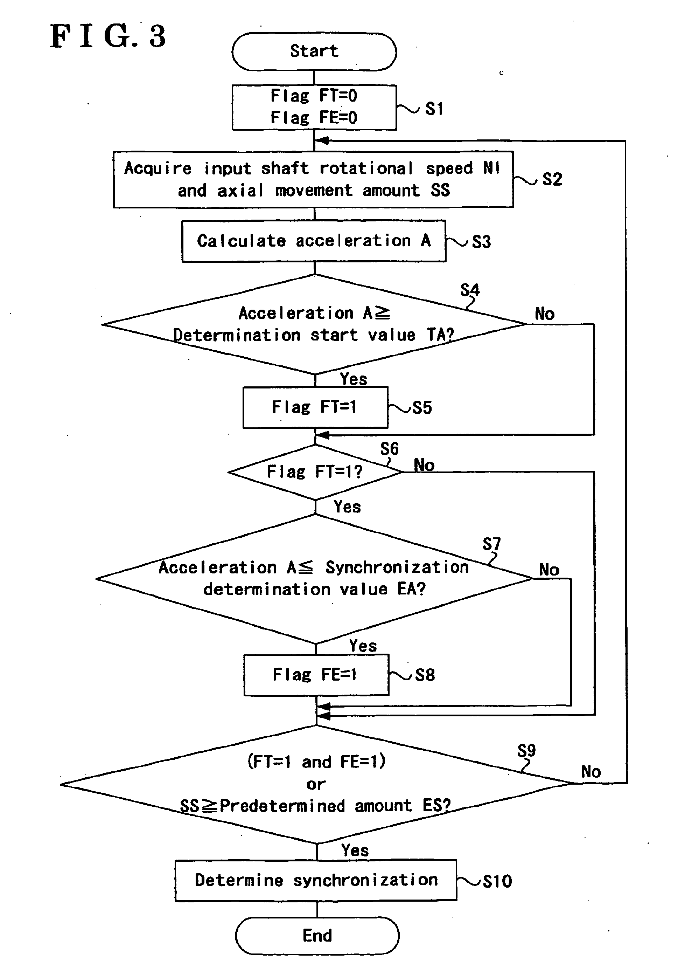

Next, a flow of the control method according to the present embodiment will be explained with reference to Fig. 3. Fig. 3 is a flowchart of a process of synchronization determination performed by the control unit 9 in the cases where the output shaft rotational speed NOA cannot be detected at a time of the gear change operation. FT in S1 is a flag indicating that the acceleration A is equal to or greater than the determination start value TA while FE is a flag indicating that the acceleration A is equal to or smaller than the synchronization determination value EA.

In S1, two flags FT and FE are cleared, i.e., set to zero. Next, in S2, signals of the input shaft rotational speed NI and the axial movement amount SS of the operation shaft are acquired and stored. In S3, the acceleration A of the input shaft 2 is calculated. The acceleration A is calculated by subtracting the input shaft rotational speed NI acquired before a time unit from the presently acquired input shaft rotational speed NI. In S4, it is determined whether or not the acceleration A is equal to or greater than the determination start value TA. When it is determined that the acceleration A is equal to or greater than the determination start value TA, the flag FT is set to one in S5. The state where the flag FT is set to one indicates the frictional engagement is achieved after the time T2 in Fig. 2. In S6 and S7, it is determined whether or not the acceleration A is equal to or smaller than the synchronization determination value EA only when the flag FT is set to one. When it is determined that the acceleration A is equal to or smaller than the synchronization determination value EA, the flag FE is set to one in S8. The state where the flag FE is set to one indicates that the synchronization is achieved after the time T4.

When it is determined that both the flags FT and FE are set to one in S9, then the synchronization is determined in S10. This is because it can be determined that a normal operation and reaction have been performed by which the acceleration A is generated at the input shaft 2 by the frictional engagement and then the acceleration A is decreased while the synchronization is proceeding. In addition, in S9, it is determined, independently of the states of the flags FT and FE, whether or not the axial movement amount SS of the operation shaft is equal to or greater than the predetermined amount ES. When it is determined that the axial movement amount SS is equal to or greater than the predetermined amount -ES, the synchronization is also determined in S10. This is because even though the determination of synchronization by the acceleration A has not been performed for some reasons, it can be definitely determined that, by considering the axial movement amount SS of the operation shaft, the sleeve has already started to be fitted to the idler gear to synchronize therewith. When it is determined that the synchronization does not occur in S9, the process returns to S2 after the unit time and repeats the same operation routine.

## Claims

1. A method for controlling an automated manual transmission (1) that includes a gear change mechanism (4) for transmitting power at a predetermined gear ratio by using one of a plurality of gear sets that is formed by gears provided at an input shaft (2) and an output shaft (3) respectively and engaging with each other, and an operation mechanism (5) including a shift and select portion for selecting the gear set, a friction portion for performing a frictional engagement with the gear provided at the output shaft, and a mesh portion for performing a mesh engagement with the gear provided at the output shaft wherein the method for controlling the automated manual transmission comprises the steps of:
obtaining a rotational speed of the input shaft;
obtaining an operation progress status of the operation mechanism; **characterized in that** the method further comprises the steps of
obtaining an acceleration based on the rotational speed of the input shaft; and
determining the synchronization when the obtained acceleration becomes equal to or
greater than a predetermined determination start value (TA) and then becomes equal to or smaller than a predetermined synchronization determination value (EA).

2. A method for controlling an automated manual transmission (1) according to claim 1, wherein a synchronizer ring constituting the friction portion of the operation mechanism (5) and frictionally engaging with an idler gear, which constitutes the gear provided at the output shaft (3) in a relatively rotatable manner, by integrally rotating with the output shaft and being pressed in an axial direction thereof and a sleeve constituting the mesh portion of the operation mechanism and being fitted to the idler gear by integrally rotating with the output shaft and moving in the axial direction thereof are driven by a same actuator controlled by the control unit (9) so as to output a large load before the synchronization is completed and to output a small load after the synchronization is completed.

3. A method for controlling an automated manual transmission (1) according to either one of claims 1 and 2, wherein the synchronization is determined in parallel with a synchronization determination based on the acceleration of the input shaft (2) when an axial movement amount of the sleeve is equal to or greater than a predetermined amount (ES).

4. A method for controlling an automated manual transmission (1) according to any one of claims 1 through 3, further comprising the step of obtaining a rotational speed of the output shaft.

5. An automated manual transmission (1) comprising a gear change mechanism (4) for transmitting power at a predetermined gear ratio by using one of a plurality of gear sets that is formed by gears provided at an input shaft (2) and an output shaft (3) respectively and engaging with each other, an operation mechanism (5) including a shift and select portion for selecting the gear set, a friction portion for performing a frictional engagement with the gear provided at the output shaft, and a mesh portion for performing a mesh engagement with the gear provided at the output shaft, an input shaft rotational speed detecting means (6) for detecting a rotational speed of the input shaft, an output shaft rotational speed detecting means (7) for detecting a rotational speed of the output shaft, a progress status detecting means (8) for detecting an operation progress status of the operation mechanism, and a control unit (9) for controlling the operation mechanism based on the rotational speed of the input shaft, the rotational speed of the output shaft, and the operation progress status of the operation mechanism, the control unit enhancing the frictional engagement before the input shaft and the output shaft synchronize with each other while enhancing the mesh engagement after the synchronization between the input shaft and the output shaft is completed at a time of a gear change operation at which the gear set for transmitting power is changed **characterized in that** the control unit further comprises an acceleration calculating means for obtaining an acceleration based on the rotational speed of the input shaft so as to determine the synchronization when the calculated acceleration becomes equal to or greater than a predetermined determination start value (TA) and then becomes equal to or smaller than a predetermined synchronization determination value (EA) in a case that the rotational speed of the output shaft is not detected.

6. An automated manual transmission (1) according to claim 5, wherein a synchronizer ring constituting the friction portion of the operation mechanism (5) and frictionally engaging with an idler gear, which constitutes the gear provided at the output shaft (3) in a relatively rotatable manner, by integrally rotating with the output shaft and being pressed in an axial direction thereof and a sleeve constituting the mesh portion of the operation mechanism and being fitted to the idler gear by integrally rotating with the output shaft and moving in the axial direction thereof are driven by a same actuator controlled by the control unit (9) so as to output a large load before the synchronization is completed and to output a small load after the synchronization is completed.

7. An automated manual transmission (1) according to either one of claims 5 and 6, wherein the synchronization is determined in parallel with a synchronization determination based on the acceleration of the input shaft (2) when an axial movement amount of the sleeve is equal to or greater than a predetermined amount (ES).

## Patentansprüche

1. Verfahren zum Steuern eines automatisierten Handschaltgetriebes (1), das einen Gangwechselmechanismus (4) zur Leistungsübertragung mit einem vorbestimmten Übersetzungsverhältnis mittels Benutzung eines aus einer Mehrzahl von Radsätzen, die aus Zahnrädern, die jeweils an einer Eingangswelle (2) und einer Ausgangswelle (3) vorgesehen und miteinander im Eingriff sind, ausgebildet sind, und einen Betätigungsmechanismus (5) aufweist, der einen Schalt- und Auswählbereich zum Auswählen des Radsatzes, einen Reibbereich zum Durchführen eines reibschlüssigen Eingriffs mit dem Zahnrad, das an der Ausgangswelle vorgesehen ist, und einen Zahneingriffsbereich zum Durchführen eines Zahneingriffs mit dem Zahnrad, das an der Ausgangswelle vorgesehen ist, aufweist,
wobei das Verfahren zum Steuern des automatisierten Handschaltgetriebes die folgenden Schritte enthält:
Erlangen einer Drehgeschwindigkeit der Eingangswelle;
Erlangen eines Betätigungsfortschrittszustands des Betätigungsmechanismus;
**dadurch gekennzeichnet, dass** das Verfahren weiter die Schritte
Erhalten einer Beschleunigung, die auf der Drehgeschwindigkeit der Eingangswelle basiert; und Bestimmung der Synchronisierung, wenn die erhaltene Beschleunigung gleich oder größer als ein vorbestimmter Bestimmungsstartwert (TA) und anschließend gleich oder kleiner als ein vorbestimmter Synchronisierbestimmungswert (EA) wird, enthält.

2. Verfahren zum Steuern eines automatisierten Handschaltgetriebes (1) nach Anspruch 1, bei dem ein Synchronring, der den Reibbereich des Betätigungsmechanismus (5) darstellt und reibschlüssig in ein Leerlaufzahnrad, das das Zahnrad darstellt, das an der Ausgangswelle (3) auf relativ rotierbare Weise vorgesehen ist, durch integrales Drehen mit der Ausgangswelle und in axialer Richtung von ihr gepresst Werden eingreift, und eine Muffe, die den Zahneingriffsbereich des Betätigungsmechanismus darstellt und in das Leerlaufzahnrad durch integrales Drehen mit der Ausgangswelle und Bewegen in der axialen Richtung von dieser eingesetzt wird, durch einen gleichen Aktuator angetrieben werden, der durch die Steuereinheit (9) so gesteuert wird, dass eine große Last vor dem Abschließen der Synchronisierung ausgegeben wird und eine kleine Last ausgegeben wird, nachdem die Synchronisierung abgeschlossen ist.

3. Verfahren zum Steuern eines automatisierten Handschaltgetriebes (1) nach einem der Ansprüche 1 oder 2, bei dem die Synchronisierung parallel mit einer auf der Beschleunigung der Eingangswelle (2) basierenden Synchronisierbestimmung bestimmt wird, wenn ein axialer Bewegungsumfang der Muffe gleich oder größer als ein vorbestimmter Umfang (ES) ist.

4. Verfahren zum Steuern eines automatisierten Handschaltgetriebes (1) nach einem der Ansprüche 1 bis 3, das weiter den Schritt des Erhaltens einer Drehgeschwindigkeit der Ausgangswelle aufweist.

5. Ein automatisiertes Handschaltgetriebe (1) mit einem Gangwechselmechanismus (4) zur Leistungsübertragung mit einem vorbestimmten Übersetzungsverhältnis mittels Benutzung eines aus einer Mehrzahl von Radsätzen, die aus Zahnrädern, die jeweils an einer Eingangswelle (2) und einer Ausgangswelle (3) vorgesehen und miteinander in Eingriff sind, ausgebildet sind, einem Betätigungsmechanismus (5), der einen Schalt- und Auswählbereich zum Auswählen des Radsatzes, einen Reibbereich zum Durchführen eines reibschlüssigen Eingriffs mit dem Zahnrad, das an der Ausgangswelle vorgesehen ist, und einen Zahneingriffsbereich zum Durchführen eines Zahneingriffs mit dem Zahnrad, das an der Ausgangswelle vorgesehen ist, enthält, einem Eingangswellendrehgeschwindigkeitserfassungsmittel (6) zum Erfassen einer Drehgeschwindigkeit der Eingangswelle, einem Ausgangswellendrehgeschwindigkeitserfassungsmittel (7) zum Erfassen einer Drehgeschwindigkeit der Ausgangswelle, einem Fortschrittszustandserfassungsmittel (8) zum Erfassen eines Betätigungsfortschrittszustands des Betätigungsmechanismus und einer Steuereinheit (9) zum Steuern des Betätigungsmechanismus basierend auf der Drehgeschwindigkeit der Eingangswelle, der Drehgeschwindigkeit der Ausgangswelle und dem Betätigungsfortschrittszustands des Betätigungsmechanismus, wobei die Steuereinheit den reibschlüssigen Eingriff steigert, bevor die Eingangswelle und die Ausgangswelle miteinander synchronisieren, während sie den Zahneingriff steigert, nachdem die Synchronisierung zwischen der Eingangswelle und der Ausgangswelle zu einem Zeitpunkt einer Gangwechselbetätigung, in der der Radsatz für die Leistungsübertragung gewechselt ist, beendet ist, **dadurch gekennzeichnet, dass** die Steuereinheit weiter ein Beschleunigungsberechnungsmittel zum Erhalten einer Beschleunigung, die auf der Drehgeschwindigkeit der Eingangswelle basiert, enthält, so dass die Synchronisierung bestimmt wird, wenn die berechnete Beschleunigung gleich oder größer als ein vorbestimmter Bestimmungsstartwert (TA) und anschließend gleich oder kleiner als ein vorbestimmter Synchronisierbestimmungswert (EA) wird, für einen Fall, in dem die Drehgeschwindigkeit der Ausgangswelle nicht erfasst wird.

6. Automatisiertes Handschaltgetriebe (1) nach Anspruch 5, bei dem ein Synchronring, der den Reibbereich des Betätigungsmechanismus (5) darstellt und reibschlüssig in ein Leerlaufzahnrad, das das Zahnrad darstellt, das an der Ausgangswelle (3) auf relativ rotierbare Weise vorgesehen ist, durch integrales Drehen mit der Ausgangswelle und in axialer Richtung von ihr gepresst Werden eingreift, und eine Muffe, die den Zahneingriffsbereich des Betätigungsmechanismus darstellt und in das Leerlaufzahnrad durch integrales Drehen mit der Ausgangswelle und Bewegen in der axialen Richtung von dieser eingesetzt wird, durch einen gleichen Aktuator angetrieben werden, der durch die Steuereinheit (9) so gesteuert wird, dass eine große Last vor dem Abschließen der Synchronisierung ausgegeben wird, und eine kleine Last ausgegeben wird, nachdem die Synchronisierung abgeschlossen ist.

7. Automatisiertes Handschaltgetriebe (1) nach einem der Ansprüche 5 oder 6, bei dem die Synchronisierung parallel mit einer auf der Beschleunigung der Eingangswelle (2) basierenden Synchronisierbestimmung bestimmt wird, wenn ein axialer Bewegungsumfang der Muffe gleich oder größer als ein vorbestimmter Umfang (ES) ist.

## Revendications

1. Procédé pour commander une transmission manuelle automatisée (1) qui comprend un mécanisme de changement de vitesse (4) pour transmettre la puissance à un rapport de vitesse prédéterminé en utilisant l'un d'une pluralité d'ensembles de pignons qui est formée par des pignons prévus sur un arbre d'entrée (2) et un arbre de sortie (3) respectivement et se mettant en prise entre eux, et un mécanisme de commande (5) comprenant une partie de sélection et de changement de vitesse pour sélectionner un ensemble de pignons, une partie de friction pour réaliser une mise en prise par friction avec le pignon prévu sur l'arbre de sortie et une partie d'engrènement pour réaliser une mise en prise par engrènement avec le pignon prévu sur l'arbre de sortie, dans lequel le procédé pour commander la transmission manuelle automatisée comprend les étapes consistant à :
obtenir une vitesse de rotation de l'arbre d'entrée ;
obtenir un état de progression de commande du mécanisme de commande ;
**caractérisé en ce que** le procédé comprend en outre les étapes consistant à :
obtenir une accélération basée sur la vitesse de rotation de l'arbre d'entrée ; et
déterminer la synchronisation lorsque l'accélération obtenue est identique ou supérieure à une valeur de début de détermination prédéterminée (TA) et devient ensuite égale ou inférieure à une valeur de détermination de synchronisation prédéterminée (EA).

2. Procédé pour commander une transmission manuelle automatisée (1) selon la revendication 1, dans lequel une bague de synchroniseur constituant la partie de friction du mécanisme de commande (5) et se mettant en prise par friction avec un pignon intermédiaire, qui constitue le pignon prévu sur l'arbre de sortie (3) d'une manière relativement rotative, en tournant de manière solidaire avec l'arbre de sortie et en étant comprimé dans sa direction axiale et un manchon constituant la partie d'engrènement du mécanisme de commande et étant monté sur le pignon intermédiaire en tournant de manière solidaire avec l'arbre de sortie et en se déplaçant dans sa direction axiale, sont entraînés par un même actionneur commandé par l'unité de commande (9) afin de produire une grande charge avant que la synchronisation soit terminée et afin de produire une petite charge après l'achèvement de la synchronisation.

3. Procédé pour commander une transmission manuelle automatisée (1) selon l'une ou l'autre des revendications 1 et 2, dans lequel la synchronisation est déterminée parallèlement à une détermination de synchronisation en fonction de l'accélération de l'arbre d'entrée (2) lorsqu'une quantité de mouvement axial du manchon est égale ou supérieure à une quantité prédéterminée (ES).

4. Procédé pour commander une transmission manuelle automatisée (1) selon l'une quelconque des revendications 1 à 3, comprenant en outre l'étape consistant à obtenir une vitesse de rotation de l'arbre de sortie.

5. Procédé pour commander une transmission manuelle automatisée (1) comprenant un mécanisme de changement de vitesse (4) pour transmettre la puissance à un rapport de vitesse prédéterminé en utilisant l'un d'une pluralité d'ensembles de pignons qui est formée par des pignons prévus sur un arbre d'entrée (2) et un arbre de sortie (3) respectivement, et se mettant en prise entre eux, un mécanisme de commande (5) comprenant une partie de sélection et de changement de vitesse pour sélectionner un ensemble de pignons, une partie de friction pour réaliser une mise en prise par friction avec le pignon prévu sur l'arbre de sortie, et une partie d'engrènement pour réaliser une mise en prise par engrènement avec le pignon prévu sur l'arbre de sortie, des moyens de détection de vitesse de rotation de l'arbre d'entrée (6) pour détecter une vitesse de rotation de l'arbre d'entrée, des moyens de détection de vitesse de rotation de l'arbre de sortie (7) pour détecter une vitesse de rotation de l'arbre de sortie, des moyens de détection d'état de progression (8) pour détecter un état de progression de commande du mécanisme de commande, et une unité de commande (9) pour commander le mécanisme de commande en fonction de la vitesse de rotation de l'arbre d'entrée, la vitesse de rotation de l'arbre de sortie, et l'état de progression de commande du mécanisme de commande, l'unité de commande améliorant la mise en prise par friction avant que l'arbre d'entrée et l'arbre de sortie ne se synchronisent tout en améliorant la mise en prise d'engrènement après que la synchronisation entre l'arbre d'entrée et l'arbre de sortie a été achevée au moment d'une opération de changement de vitesse à laquelle on change l'ensemble de pignons pour transmettre la puissance, **caractérisé en ce que** l'unité de commande comprend en outre des moyens de calcul d'accélération pour obtenir une accélération en fonction de la vitesse de rotation de l'arbre d'entrée afin de déterminer la synchronisation lorsque l'accélération calculée est égale ou supérieure à une valeur de début de détermination prédéterminée (TA) et devient ensuite égale ou inférieure à une valeur de détermination de synchronisation prédéterminée (EA) dans un cas dans lequel la vitesse de rotation de l'arbre de sortie n'est pas détectée.

6. Transmission manuelle automatisée (1) selon la revendication 5, dans laquelle une bague de synchroniseur constituant la partie de friction du mécanisme de commande (5) et se mettant en prise avec un pignon intermédiaire, qui constitue le pignon prévu sur l'arbre de sortie (3) d'une manière relativement rotative, en tournant de manière solidaire avec l'arbre de sortie et en étant comprimé dans sa direction axiale et un manchon constituant la partie d'engrènement du mécanisme de commande et étant monté sur le pignon intermédiaire en tournant de manière solidaire avec l'arbre de sortie et se déplaçant dans sa direction axiale, sont entraînés par le même actionneur commandé par l'unité de commande (9) afin de produire une grande charge avant l'achèvement de la synchronisation et afin de produire une petite charge après l'achèvement de la synchronisation.

7. Transmission manuelle automatisée (1) selon l'une ou l'autre des revendications 5 ou 6, dans laquelle la synchronisation est déterminée parallèlement à une détermination de synchronisation en fonction de l'accélération de l'arbre d'entrée (2) lorsqu'une quantité de mouvement axiale du manchon est égale ou supérieure à une quantité prédéterminée (ES).
